# EUROPÄISCHE PATENTSCHRIFT

(11) **EP 3 329 580 B1**
(45) Veröffentlichungstag und Bekanntmachung des Hinweises auf die Patenterteilung: **29.07.2020**
(21) Anmeldenummer: 15820859.5
(22) Anmeldetag: 23.12.2015
(51) Int. Cl.: H02K 7/102, H02K 7/116

(54) **BREMSVORRICHTUNG FÜR EINEN ELEKTRISCHEN ANTRIEBSMOTOR**
BRAKING MECHANISM FOR AN ELECTRIC DRIVE MOTOR
DISPOSITIF DE FREINAGE POUR MOTEUR ÉLECTRIQUE D'ENTRAÎNEMENT

(30) Priorität: 28.07.2015 DE 202015103948 U
(43) Veröffentlichungstag der Anmeldung: 06.06.2018
(73) Patentinhaber: DewertOkin GmbH, 32278 Kirchlengern (DE)
(72) Erfinder: KUHN, Christin, 32657 Lemgo (DE); MÜLLER, Christian, 32369 Rahden (DE); MÜLLER, Sven, 32278 Kirchlengern (DE)
(74) Vertreter: Kleine, Hubertus
(86) Internationale Anmeldenummer: PCT/EP2015/081152
(87) Internationale Veröffentlichungsnummer: WO 2017/016618

(56) Entgegenhaltungen:
- EP-A1- 1 556 630
- CN-U- 203 827 112
- DE-U1-202004 008 713
- DE-U1-202004 008 714

## Beschreibung

Die Erfindung betrifft eine Bremsvorrichtung für einen elektrischen Antriebsmotor, insbesondere einen Antriebsmotor mit einer über das Motorengehäuse hervorstehenden Ankerwelle, die mindesten ein Bremselement und einen Kraftspeicher aufweisen, wobei der Kraftspeicher das Bremselement permanent mit einer Bremskraft beaufschlagt.

Derartige Antriebsmotoren werden vielfältig eingesetzt, unter anderem in elektrischen Möbelantrieben, die zur Verstellung eines Möbelteils dienen. Das Möbelteil kann dabei beispielsweise ein Kopf- oder Fußteil eines Bettes oder Sitzmöbels sein. Häufig wird die Antriebskraft des Antriebsmotors über ein Schneckengetriebe mit nachgelagertem Spindelantrieb auf das Möbelteil übertragen. Das Schneckengetriebe wird durch eine auf der Ankerwelle des Antriebsmotors angebrachte oder ausgebildete Schnecke in Verbindung mit einem Schneckenrad, in das die Schnecke eingreift, gebildet. Das Schneckengetriebe bietet den Vorteil einer Selbsthemmung, wodurch bei ausgeschaltetem Motor ein Absenken eines mit Gewichtskraft belasteten Möbelteils verhindert wird.

Insbesondere im Pflegebereich werden hohe Anforderungen an die Selbsthemmung gestellt. Auch bei einem ungünstig gelagerten Patienten darf sich beispielsweise ein Kopf- oder Fußteil eines Krankenhausbettes nicht absenken. Um diesen hohen Anforderungen gerecht zu werden, kann es notwendig sein, zusätzlich zu der Selbsthemmung durch das Schneckengetriebe eine Bremsvorrichtung vorzusehen, die die Ankerwelle des Motors beim Motorstillstand bremst und somit ein Absenken des Möbelteils verhindert.

Derartige Bremsvorrichtungen können als aktiv ansteuerbare Bremsen ausgebildet sein, die beispielsweise elektromechanisch betätigt die Ankerwelle des Motors im Stillstand abbremsen.

Alternativ können auch nicht aktiv angesteuerte Bremsen für eine Ankerwelle eines elektrischen Antriebsmotors eingesetzt werden. Derartige Bremsen sind aus den Druckschriften DE 20 2004 008 713 U1 und DE 20 2004 008 714 U1 bekannt. Bei diesen Bremsvorrichtungen erfolgt eine leichte permanente Bremsung der Ankerwelle, die im Betrieb des Antriebsmotors durch dessen Drehmoment überwunden wird, die aber dennoch ausreichend groß ist, um im Stillstand in Verbindung mit der Selbsthemmung durch das Schneckengetriebe eine unbeabsichtigte Drehung des elektrischen Antriebsmotors durch Belastung des verstellbaren Möbelteils zu verhindern.

Die in den genannten Schriften vorgestellten und eingangs genannten Bremsvorrichtungen weisen jeweils eine Kraftspeichereinrichtung, beispielsweise eine Feder auf, die ein Bremselement permanent mit einer Bremskraft beaufschlagen. Durch die Bremskraft wird das Bremselement z.B. gegen einen Bremsläufer gedrückt, der drehfest mit der Ankerwelle des Motors in Verbindung steht.

Die Druckschrift CN 203827112 U zeigt ebenfalls einen permanent gebremsten Elektromotor, ausgebildet als Rohrmotor zur Verwendung z.B. in Verschattungssystemen. Der Motor weist drei axial hintereinander im Motor angeordnete Bremselemente auf.

Das Dokument DE 20 2004 008 713 U1 offenbart eine Bremsvorrichtung für einen elektrischen Antriebsmotor, die ein Bremselement und einen Kraftspeicher aufweist, wobei der Kraftspeicher eine Reibfläche des Bremselements permanent mit einer Bremskraft beaufschlagt.

Die genannten permanenten Bremsvorrichtungen haben sich bewährt und sind gegenüber aktiv angesteuerten Bremsvorrichtungen in ihrem Aufbau einfacher und deshalb grundsätzlich kostengünstiger. Sie sind dennoch nicht unaufwändig in der Herstellung, da sichergestellt sein muss, dass die aus unterschiedlichen Materialien bestehenden Kraftspeicher und Bremselemente sicher mit einander verbunden sind, ohne dass dieses den Fertigungsaufwand erhöht.

Es ist daher eine Aufgabe der vorliegenden Erfindung, eine Bremsvorrichtung der eingangs genannten Art zu schaffen, die möglichst einfach und damit kostengünstig im Aufbau ist und bei zuverlässiger Funktion eine lange Lebensdauer aufweist.

Diese Aufgabe wird gelöst durch eine Bremsvorrichtung mit den Merkmalen des unabhängigen Anspruchs 1. Vorteilhafte Ausgestaltungen und Weiterbildungen sind in den abhängigen Ansprüchen angegeben.

Eine erfindungsgemäße Bremsvorrichtung der eingangs genannten Art zeichnet sich dadurch aus, dass Kraftspeicher und Bremselement aus dem gleichen Material einstückig aufgebaut sind. Der Erfindung liegt die Grundidee zu Grunde, dass bei entsprechender Formgebung das Bremselement selbst eine ausreichende Federwirkung erzielen kann, um eine benötigte Bremskraft aufzubringen.

In einer vorteilhaften Ausgestaltung der Bremsvorrichtung ist diese ringförmig ausgebildet, wobei ein in sich geschlossener ringförmiger Grundkörper eine zentrale Öffnung zur Aufnahme eines Abschnitts der Ankerwelle des Antriebsmotors aufweist. Bevorzugt sind im Grundkörper radial und/oder schräg verlaufende und nach innen und/oder außen offene Einschnitte eingebracht. Dadurch, dass der Grundkörper umlaufend in sich geschlossen ist, kann er aus sich heraus, ohne eine Abstützung an externen Komponenten eine radial wirkende Bremskraft auf die durch die zentrale Öffnung geführte Ankerwelle ausüben.

Durch die Einschnitte wird die Materialstärke des ringförmigen Grundkörpers reduziert, so dass er leichter aufgeweitet werden kann, wodurch eine Federwirkung erzielt wird. Die Anzahl und Tiefe der Einschnitte ermöglicht es dabei, die gewünschte Federkraft und auch den Federweg für das verwendete Materials des Grundkörpers einzustellen. So kann ein an sich relativ hartes und in sich nicht besonders elastisches Material für den Grundkörper verwendet werden, das entsprechend trotz der aufgebrachten Bremswirkung sich wenig abnutzt und sich dennoch eine Federwirkung mit ausreichendem Federweg und einer benötigten und insbesondere nicht zu starken Federkraft ergibt. Mehrere Einschnitte können bevorzugt sternförmig angeordnet sein. Es können sich bevorzugt nach innen und nach außen offene Einschnitte umlaufend abwechseln.

Als Material des Grundkörpers kann beispielsweise Zink oder Bronze oder ein möglichst hochtemperaturbeständiger Kunststoff, beispielsweise PEEK (Polyetheretherketon) verwendet werden. Die genannten Materialien sind in der Regel weicher als das üblicherweise verwendete Material der Ankerwelle, nämlich fester, ungehärteter Stahl, so dass ein Bremsen der Ankerwelle keine Beschädigung der Oberfläche der Ankerwelle zur Folge hat. Dennoch sind die genannten Materialien hart genug, um eine Bremswirkung möglichst verschleißfrei und damit für einen langen Lebensdauerzyklus zu erzielen.

Die genannte Bremsvorrichtung kann in ihrer ringförmigen Ausgestaltung einfach und platzsparend auf die Ankerwelle gesteckt an den Motorgehäuse anliegen oder in eine Aufnahme in das Motorgehäuse eingesetzt werden. Zur Festlegung der Bremsvorrichtung muss lediglich ein axiales Verrutschen der Motorwelle verhindert werden, was durch Halte- oder Rastvorsprünge erreicht werden kann. Weiterhin ist die Bremsvorrichtung gegen Verdrehen zu sichern, was beispielsweise ebenfalls durch Rast- oder Haltevorsprünge, die am Motorgehäuse angeordnet sind, erfolgen kann. Diese Vorsprünge können beispielsweise in die genannten Einschnitte im Grundkörper der Bremsvorrichtung eingreifen. Alternativ können am äußeren Umfang des Grundkörpers Vorsprünge angeordnet sein, die mit den genannten Halte- oder Rastvorsprüngen zusammenwirken und die Bremsvorrichtung unverdrehbar am Motorgehäuse fixieren. Die Halte- oder Rastvorsprünge können am Motorgehäuse selbst oder an einem Motorhalter angeordnet bzw. ausgebildet sein.

Besonders vorteilhaft bildet eine Oberfläche des mindestens einen Bremselements selbst die Reibfläche. Auf diese Weise wird ein besonders einfacher Aufbau der Bremsvorrichtung erzielt, insbesondere wenn das Bremselement aus Kunststoff in einem Spritzgussverfahren hergestellt ist.

Alternativ ist es jedoch auch möglich ein zusätzliches Ringsegment auf das mindesten eine Bremselement aufzubringen, das zur zentralen Öffnung hinweist. In dem Fall bildet eine Oberfläche des Ringsegments die Reibfläche. So kann unabhängig vom Material des Grundkörpers eine zur Bremsung besonders geeignete Reibfläche bereitgestellt werden.

In einer weiteren vorteilhaften Ausgestaltung ist die Bremsvorrichtung integral mit einer Motorhalteplatte ausgebildet. Hierdurch werden Herstellungs- und Montageaufwand des elektromotorischen Antriebs weiter verringert. Alternativ kann mit gleichem Vorteil die Bremsvorrichtung auch in den elektrischen Antriebsmotor integriert sein und dort insbesondere zusätzlich die Funktion eines Gleitlagers für die Antriebswelle einnehmen. Insbesondere das hintere Achslager eines Antriebsmotors ist häufig nicht als Kugellager, sondern als Gleitlager ausgebildet. Das standardmäßig vorgesehene Gleitlager kann durch die erfindungsgemäße Bremsvorrichtung mit Gleitlagerfunktion ersetzt werden.

In einer weiteren vorteilhaften Ausgestaltung der Bremsvorrichtung ist diese ringförmig aus einem Blechmaterial gebildet, vorzugsweise in einem Prägevorgang. Wiederum weist die Bremsvorrichtung einen ringförmigen Grundkörper auf mit einer zentralen inneren Öffnung zur Aufnahme der Achswelle. Der Grundkörper weist nach innen zur zentralen Öffnung hin offene Einschnitte auf, durch die zwischenliegende Federzungen ausgebildet sind. Die Federzungen sind zur inneren Öffnung hin aus der Ebene des ringförmigen Grundkörpers hinausgebogen, so dass sie in ihrem vorderen Ende einen axial verlaufenden Abschnitt aufweisen, mit dem die Federzungen radial auf eine durch die zentrale Öffnung geführte Achswelle drücken und so Bremskraft ausüben. In dieser Ausgestaltung kann das Bremselement ebenso einfach und platzsparend am Motorgehäuse festgelegt werden. Die Bremsvorrichtung ist ebenfalls einstückig gefertigt, bevorzugt aus einem dünnen und federnden Blechmaterial. Die Federkraft wird durch die Formgebung der ausgestellten und in ihrem jeweiligen Endabschnitt axial verlaufenden Federzungen erzielt.

Die Erfindung wird nachfolgend anhand von Ausführungsbeispielen mit Hilfe von Figuren näher erläutert. Die Figuren zeigen:
- Figuren 1a - 1c: jeweils eine isometrische Darstellung eines Antriebsmotors mit einer auf einer Achswelle des Antriebsmotors aufgesetzten Bremsvorrichtung;
- Figur 1d: eine Darstellung des Antriebsmotors der Figuren 1a - 1c ohne Bremsvorrichtung;
- Figuren 2a - 2c: jeweils eine Draufsicht und eine isometrische Darstellung des Bremselements der Figuren 1a - 1c;
- Figuren 3a - 3c: jeweils eine isometrische Darstellung eines weiteren Ausführungsbeispiels einer Bremsvorrichtung;
- Figuren 4, 5: jeweils eine isometrische Darstellung einer weiteren Ausgestaltung einer Bremsvorrichtung;
- Figuren 6a, 6b: jeweils eine isometrische Darstellung bzw. eine Aufsicht auf eine weitere Ausgestaltung einer Bremsvorrichtung;
- Figur 7: eine Schnittdarstellung eines Antriebsmotors mit integrierten Bremsvorrichtungen;
- Figur 8a: eine isometrische Darstellung bzw. eine Aufsicht auf eine weitere Ausgestaltung einer Bremsvorrichtung;
- Figuren 8b, 8c: jeweils eine isometrische Darstellung der Bremsvorrichtung der Figur 8a mit einem Betätigungshebel in verschiedenen Stellungen;
- Figur 9a: eine isometrische Darstellung einer weiteren Ausgestaltung einer Bremsvorrichtung;
- Figur 9b: eine isometrische Schnittdarstellung der Bremsvorrichtung der Figur 9a;
- Figur 10: eine isometrische Darstellung einer weiteren Ausgestaltung einer Bremsvorrichtung;
- Figur 11a: eine isometrische Darstellung einer weiteren Ausgestaltung einer Bremsvorrichtung;
- Figur 11b: eine Seitenansicht der Bremsvorrichtung der Figur 11a, aufgesetzt auf einen Antriebsmotor;
- Figuren 12a-12d: verschiedene Darstellungen einer weiteren Ausgestaltung einer Bremsvorrichtung;
- Figur 13: eine isometrische Darstellung einer weiteren Ausgestaltung einer Bremsvorrichtung, aufgesetzt auf einen Antriebsmotor; und
- Figuren 14 und 15: jeweils eine isometrische Darstellung einer weiteren Ausgestaltung einer Bremsvorrichtung.

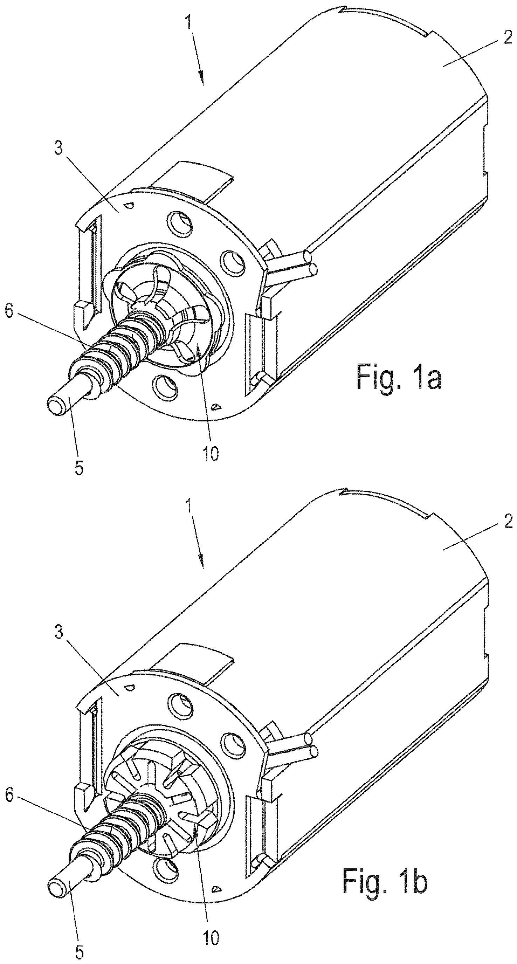

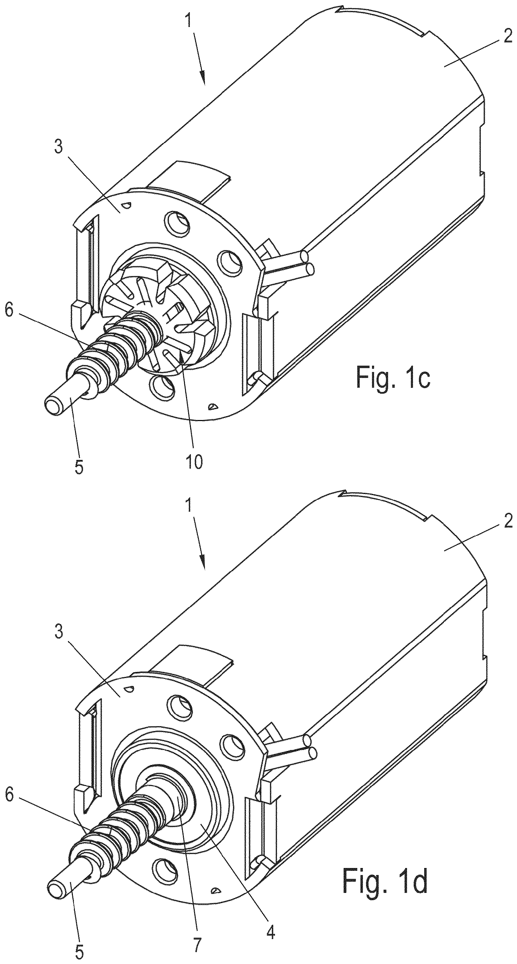

Die Figuren 1a bis 1c zeigen in jeweils gleicher Weise einen elektrischen Antriebsmotor 1 mit einer Bremsvorrichtung 10 in einer isometrischen Ansicht. Figur 1d zeigt in ebenfalls gleicher Darstellung den Antriebsmotor 1 ohne eine Bremsvorrichtung.

Der Antriebsmotor 1 weist jeweils ein Gehäuse 2 auf mit einer Flanschplatte 3, an der Befestigungsmöglichkeiten für den Antriebsmotor 1 vorhanden sind. Weiter ist zentral in der Flanschplatte 3 ein Lager 4 (vgl. Figur 1d) für eine Achswelle 5 des Antriebsmotors 1 angeordnet. Das Lager 4 kann in einem Lagersitz der Flanschplatte 3 entweder von außen zugänglich oder von der Innenseite des Gehäuses 2 her eingesetzt gehalten sein. Auf der gegenüber liegenden Seite des Gehäuses 2 ist ein vergleichbares Lager für die Achswelle 5 angeordnet. Vorliegend ist das in der Flanschplatte 3 vorgesehene Lager 4 beispielsweise ein Wälzlager, z. B. ein Kugellager oder ein Rollenlager. Das auf der gegenüberliegenden Seite angeordnete Lager kann ebenfalls ein derartiges Wälzkörperlager vorgesehen sein oder auch ein Gleitlager.

Die Achswelle 5 steht über die Flanschplatte 3 hervor. Neben einem optionalen Lagerzapfen am Ende der Achswelle 5 ist diese mit einer Schnecke 6 versehen. Die Schnecke 6 kann ein separates und auf die Achswelle 5 aufgesetztes Teil sein, oder aber integral mit der Achswelle 5 ausgebildet sein. Im Bereich des Lagers 4 ragt die Achswelle 5 zunächst mit einem Achsabschnitt 7 über die Flanschplatte 3 hinaus, bevor sich an diesen die Schnecke 6 anschließt. Der Achsabschnitt 7 ist zylindrisch mit einer glatten Oberfläche ausgebildet, wobei der Durchmesser des Achsabschnitts 7 den äußeren Durchmesser der Schnecke 6 zumindest leicht übersteigt.

Wie die Figuren 1a bis 1c zeigen, ist die Bremsvorrichtung 10 jeweils ringförmig ausgebildet und so weit auf die Achswelle 5 aufgesteckt, dass sie im Wesentlichen an der Flanschplatte 3 anliegt und auf den Achsabschnitt 7 der Achswelle 5 wirkt.

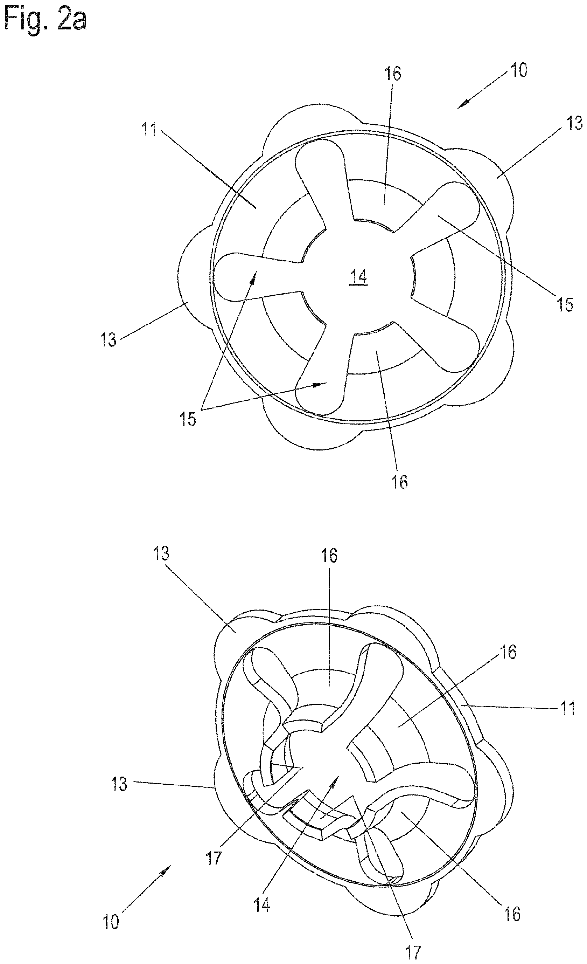

Die drei Ausführungsbeispiele der Bremsvorrichtung 10 gemäß den Figuren 1a bis 1c sind in den Figuren 2a bis 2c jeweils genauer dargestellt. Die Figuren 2a bis 2c zeigen jeweils in ihrem oberen Teil eine Draufsicht auf die Bremsvorrichtung 10 und im unteren Teil eine isometrische Schrägansicht auf die Bremsvorrichtung 10.

Bei dem Ausführungsbeispiel der Figuren 1a und 2a ist die Bremsvorrichtung 10 einstückig aus einem ringförmigen Grundkörper 11 gefertigt, insbesondere in einem Stanz- und Biege- bzw. Prägeprozess aus einem Blechelement.

Das Material des Grundkörpers 11 ist bevorzugt ein Federblech, beispielsweise ein Stahlblech oder ein Blech aus einer Federbronze. Der ringförmige Grundkörper 11 ist im Außenbereich umlaufend geschlossen, so dass er radiale Kräfte aus sich heraus auf die Achswelle 5 ausüben kann. Diese ist durch eine zentrale Öffnung 14 im Grundkörper 11, die eine Achsaufnahme bildet, geführt. Am äußeren Umfang weist der Grundkörper 11 radial hervorstehende Abschnitte 13 auf, die sich mit Abschnitten geringerem Durchmesser abwechseln. Mit Hilfe der radial hervorstehenden Abschnitte 13 kann die Bremsvorrichtung 10 drehfest relativ zum Antriebsmotor 1 gehalten werden. Dazu können beispielsweise an der Flanschplatte 3 des Antriebsmotors 1 Halte- oder Rastvorsprünge ausgebildet sein, die die Bremsvorrichtung 10 zum einen drehfest halten und zum anderen in axialer Richtung an der Flanschplatte 3 fixieren. Bei den Ausführungsbeispielen der Figuren 1a bis 1c weist die Flanschplatte 3 keine derartigen Halte- oder Rastvorsprünge auf. Stattdessen ist eine Fixierung der Bremsvorrichtung 10 über eine hier nicht dargestellte Motorhalterung, an der auch der Antriebsmotor 1 befestigt ist, vorgesehen.

In den Grundkörper 11 der Bremsvorrichtung 10 sind sternförmig Einschnitte 15 eingebracht, die nach innen zur zentralen Öffnung 14 hin offen sind. Diese Einschnitte werden nachfolgend auch innere Einschnitte 15 genannt. Durch die inneren Einschnitte 15 sind aus dem Grundkörper 11 im Bereich der zentralen Öffnung 14 Federzungen 16 ausgebildet, die in dem Prägeprozess so aus der Ebene des Grundkörpers 11 herausgebogen sind, dass sie in einem vorderen freien Abschnitt in Achsrichtung der Achswelle 5, also im Wesentlichen senkrecht zur Ebene, in der der äußere umlaufende Abschnitt des Grundkörpers 11 liegt, ausgerichtet sind.

Diese vorderen Abschnitte der Federzungen 16 drücken auf den Achsabschnitt 7 der Achswelle 5 und bremsen so die Achswelle 5. Diese Abschnitte bilden Bremselemente 17 der Bremsvorrichtung. Die nach innen weisenden Flächen der vorderen Bremselemente 17 der Federzungen 16 stellen damit die Reibflächen , auch Bremsflächen genannt, der Bremsvorrichtung 10 dar. Durch die Anzahl der inneren Einschnitte 15 und damit die Anzahl der Federzungen 16 und die Tiefe und Breite der inneren Einschnitte 15 kann die Bremswirkung der Bremsvorrichtung 10 definiert vorgegeben werden. Im entspannten Zustand der Bremsvorrichtung 10 ist der Durchmesser der zentralen Öffnung 14 bevorzugt kleiner als der Durchmesser des Achsabschnitts 7 der Achswelle 5, so dass die Bremsvorrichtung 10 mit Vorspannung auf dem Achsabschnitt 7 sitzt.

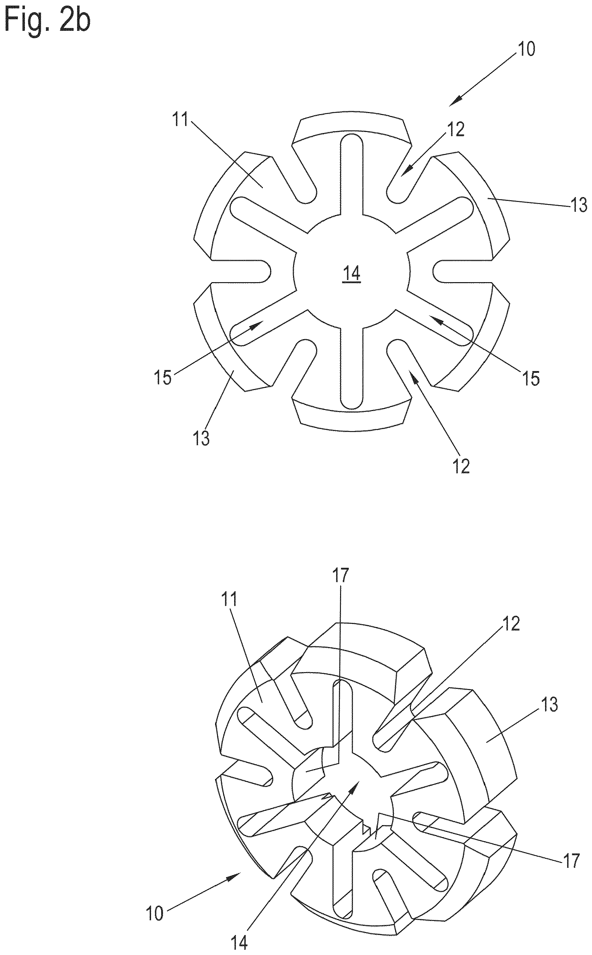

Die in den Figuren 1b und 2b dargestellte Bremsvorrichtung 10 weist ebenfalls einen einstückigen Grundkörper 11 auf. Dieser ist vorliegend nicht aus einem dünnen Blechmaterial, sondern aus einem Vollmaterial aus Metall, beispielsweise Zink oder Bronze oder aus einem harten und bevorzugt hitzebeständigen Kunststoff, beispielsweise PEEK (Polyetheretherketon) gefertigt. Die Dicke des Grundkörpers 11 liegt vorliegend im Bereich von einigen Millimetern und entspricht damit im Wesentlichen der Länge des Achsabschnittes 7 (vgl. Figur 1b).

In den Grundkörper 11 sind von außen nach innen ragende Einschnitte 12 eingebracht, die nachfolgend auch als äußere Einschnitte 12 bezeichnet werden. Vorliegend sind sechs äußere Einschnitte 12 vorgesehen, die gleichmäßig verteilt sternfömig angeordnet sind. Bedingt durch die äußeren Einschnitte 12 verbleiben vom Grundkörper 11 im äußeren Bereich radial hervorstehende Abschnitte 13, die wie bei der Bremsvorrichtung 10 des ersten Ausführungsbeispiels (vgl. Figur 2a) zur drehfesten Fixierung der Bremsvorrichtung 10 eingesetzt werden können.

Versetzt zu den äußeren Einschnitten 12 sind innere Einschnitte 15 vorhanden, die den Grundkörper 11 von der zentralen Öffnung 14 aus nach außen hin einschneiden. Bedingt durch die äußeren und die inneren Einschnitte 12, 15 erhält die Bremsvorrichtung 10 eine Federwirkung in radialer Richtung. Zwischen den inneren Einschnitten 15 verbleiben im Bereich der zentralen Öffnung 14 Abschnitte des Grundkörpers 11, die als Bremselemente 17 auf dem entsprechenden Achsabschnitt 7 der Achswelle 5 drücken. Wiederum kann, vergleichbar mit dem Ausführungsbeispiel der Figur 2a, durch Anpassung der Anzahl und der Tiefe der inneren Einschnitte 15, aber auch der äußeren Einschnitte 12 die Federwirkung des Grundkörpers 11 in weiten Bereichen variiert und damit an die erforderlichen Bedürfnisse angepasst werden.

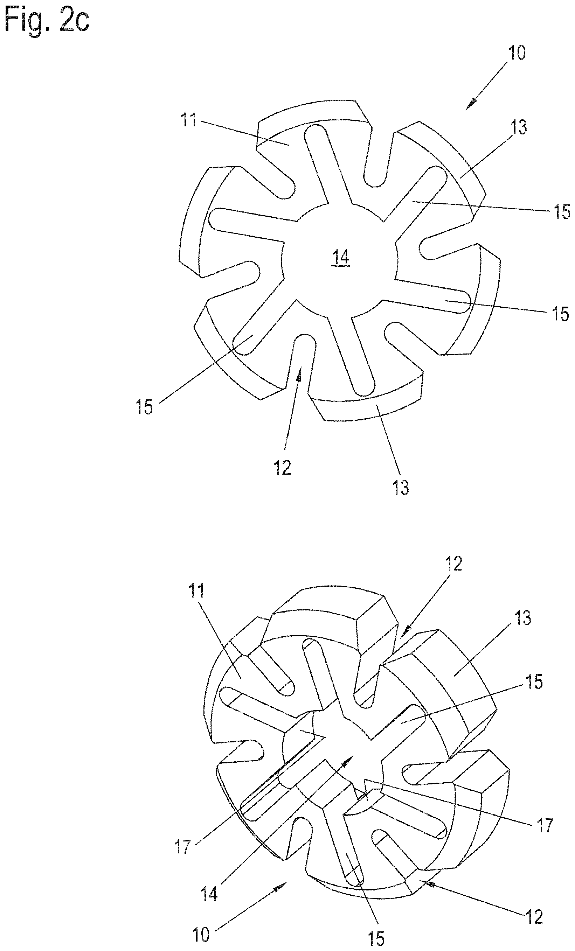

In den Figuren 1c und 2c ist ein weiteres Ausführungsbeispiel der Bremsvorrichtung 10 dargestellt. Die Bremsvorrichtung 10 entspricht in ihrem Grundaufbau der des zweiten Ausführungsbeispiels gemäß den Figuren 1b bzw. 2b. Im Unterschied dazu verlaufen die äußeren Einschnitte 12 und die inneren Einschnitte 15 hierbei jedoch nicht genau radial, sondern schräg nach außen bzw. innen. In alternativen Ausgestaltungen kann vorgesehen sein, dass nur die äußeren oder nur die inneren Einschnitte 12, 15 schräg verlaufen, wohingegen die andere Art der Einschnitte 12, 15 radial verlaufen.

Durch die Schrägstellung von zumindest einer Art der Einschnitte 12, 15 wird eine Asymmetrie im Bremsverhalten im Hinblick auf die Drehrichtung der Achswelle 5 relativ zur Bremsvorrichtung 10 erzielt. Je nach Drehrichtung der Achswelle 5 wird eine auflaufende oder ablaufende Wirkung an den Bremselementen 17 erzielt, durch die die Bremswirkung in eine der Drehrichtungen verstärkt und in der anderen der Drehrichtungen abgeschwächt wird. So kann beispielsweise erreicht werden, dass bei einem elektromotorischen Möbelantrieb die Richtung, in der ein Absenken des Möbelteils durch erhöhte Gewichtsbelastung einsetzen könnte, eine erhöhte Bremswirkung erfährt.

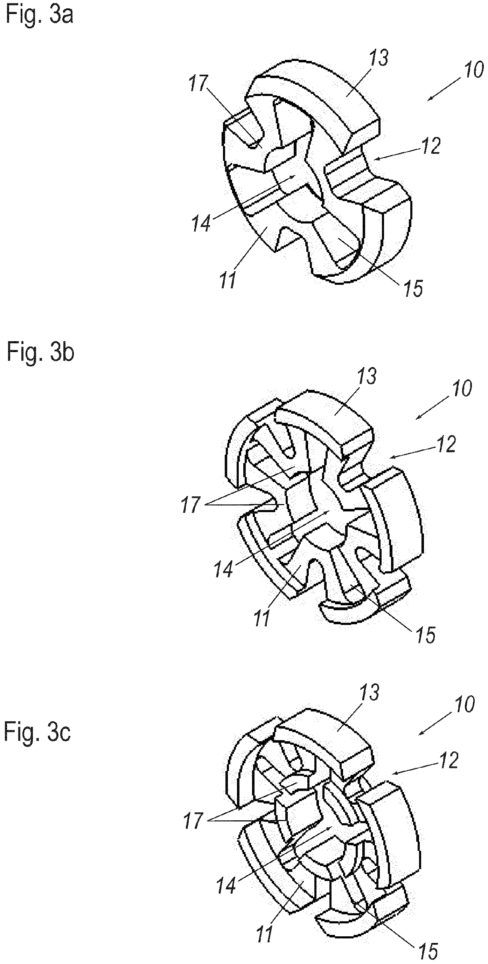

In den Figuren 3a bis 3c sind drei weitere Ausführungsbeispiele einer anmeldungsgemäßen Bremsvorrichtung 10 in jeweils einer isometrischen Darstellung wiedergegeben. Auch diese Bremsvorrichtungen 10 entsprechen in ihrem Grundaufbau der des zweiten Ausführungsbeispiels gemäß den Figuren 1b bzw. 2b, auf deren Beschreibung hiermit explizit verwiesen wird. Gleiche Bezugszeichen kennzeichnen bei diesen wie allen folgenden Ausführungsbeispielen gleiche oder gleichwirkende Elemente wie bei den vorherigen Ausführungsbeispielen.

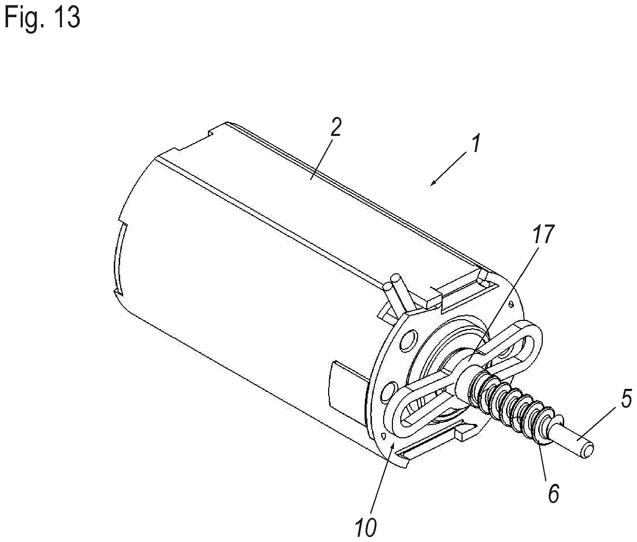

Bei der Bremsvorrichtung 10 gemäß Figur 3a sind anstelle der beim zweiten Ausführungsbeispiel gezeigten sechs Bremselemente 17 drei Bremselemente 17 und entsprechend ebenso jeweils drei innere Einschnitte 15 und drei äußere Einschnitte 12 vorgesehen. Prinzipiell könnte die gezeigte Bremsvorrichtung 10 auch mit nur zwei Bremselementen 17 ausgebildet sein, ohne dass der grundsätzliche Aufbau und die Funktionsweise unterschiedlich wären (vgl. auch Fig. 13).

Bei den in den Figuren 3b und 3c gezeigten Ausführungsbeispielen, die grundsätzlich ebenfalls dem zweiten Ausführungsbeispiel gemäß Figur 1b bzw. 2b entsprechen, sind fünf Bremselemente 17 und entsprechend fünf innere Einschnitte 15 bzw. äußere Einschnitte 12 vorgesehen. Bei dem Ausführungsbeispiel der Figur 3b ist der Grundkörper 11 innen in axialer Richtung dünner als an seinem äußeren Rand. Beim Ausführungsbeispiel der Figur 3c weist die Bremsvorrichtung 10 im Bereich der Bremselemente wiederum eine größere Dicke auf, die beispielsweise gleich der Dicke im äußeren Bereich gewählt sein kann.

Mit den gezeigten Profilierungen des Grundkörpers 11 kann zum einen eine Material- und damit Kosten- bzw. Gewichtseinsparung erzielt werden, und zum anderen können die wirkenden Federkräfte beeinflusst werden.

Andere Parameter, mit denen die Federkraft beeinflusst werden kann, sind der Gesamtdurchmesser (äußerer Durchmesser) der Bremsvorrichtung 10, die Anzahl der Bremselemente 17 bzw. der inneren und äußeren Einschnitte 15, 12 sowie die Tiefe der inneren bzw. äußeren Einschnitte 12, 15.

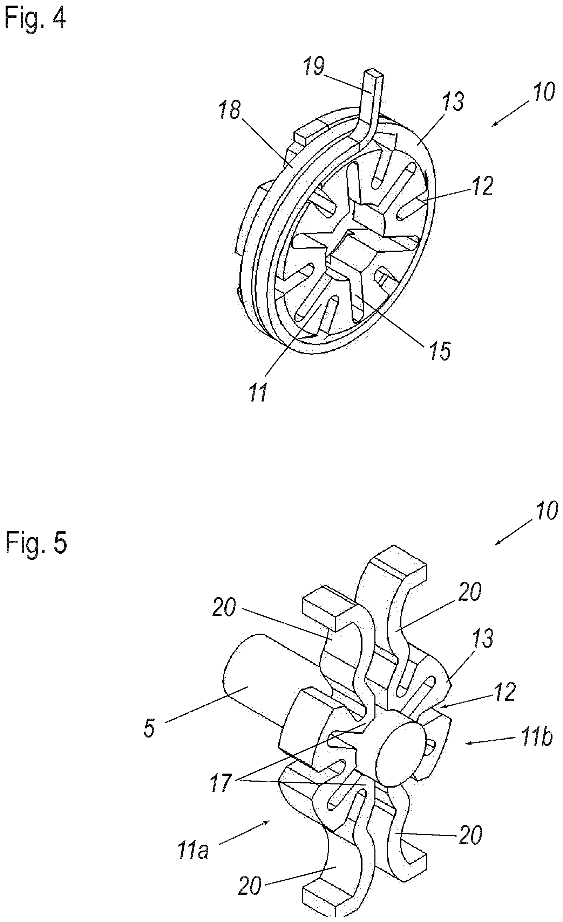

In Figur 4 ist eine weitere Ausgestaltung einer anmeldungsgemäßen Bremsvorrichtung 10 gezeigt. Bei dieser Bremsvorrichtung 10 ist zusätzlich zu der Federwirkung des Grundkörpers ein weiteres Federelement vorhanden, um die Bremskraft der Bremsvorrichtung 10 zu erhöhen.

Im dargestellten Fall ist das weitere Federelement eine Schlingfeder 18, die um den Grundkörper 11 gelegt ist. Im dargestellten Ausführungsbeispiel ist ein Ende 19 der Schlingfeder 18 abgebogen. Mit diesem abgebogenen Ende 19 kann diese Seite der Schlingfeder relativ zum Motorgehäuse des Antriebsmotors 1 festgelegt werden. Das andere Ende der Schlingfeder 18 ist frei.

Der Grundkörper 11 der Bremsvorrichtung 10 wird im dargestellten Ausführungsbeispiel bezüglich seiner Drehlage nur durch die Schlingfeder 18 festgelegt. Dieses führt dazu, dass sich beim Mitdrehen des Grundkörpers 11 aufgrund seiner inneren Federkraft auf der Achswelle 5 des Antriebsmotors 1 in einer Drehrichtung die Schlingfeder 18 öffnet, wodurch der Grundkörper 11 in der Schlingfeder 18 sich mitdrehen kann. In der entgegengesetzten Drehrichtung zieht sich die Schlingfeder 18 bei Drehung des Grundkörpers 11 zu, sodass eine Bremswirkung zwischen Grundkörper 11 und Schlingfeder 18 einsetzt, die zudem den Grundkörper 11 zusätzlich zur inneren Federkraft weiter zusammendrückt. Folglich wird in dieser Drehrichtung der Achswelle 5 des Antriebsmotors 1 eine größere Bremskraft von der Bremsvorrichtung 10 auf die Achswelle 5 ausgeübt als in der zuvor beschriebenen entgegengesetzten Drehrichtung. Die dargestellte Bremsvorrichtung 10 weist somit drehrichtungsabhängig unterschiedliche Bremswirkungen auf den Antriebsmotor 1 auf.

Gemäß der Ausführung nach Figur 4 weist die Schlingfeder 18 zwei Umschlingungswindungen auf. In alternativen Ausgestaltungen kann eine (Schling-) Feder auch nur eine oder weniger als eine Windung oder mehr als zwei Umschlingungen aufweisen.

In einer alternativen Ausgestaltung der Bremsvorrichtung 10 gemäß Figur 4 können die äußeren Einschnitte 12 und die inneren Einschnitte 15 im Grundkörper 11 analog zum Ausführungsbeispiel gemäß Figur 2c schräg ausgeführt sein, um die Drehrichtungsabhängigkeit der Bremswirkung der Bremsvorrichtung 10 weiter zu verstärken.

Figur 5 zeigt ein weiteres Ausführungsbeispiel einer Bremsvorrichtung 10 in einer isometrischen Darstellung. Auch bei diesem Ausführungsbeispiel kennzeichnen gleiche Bezugszeichen gleiche oder gleichwirkende Elemente wie bei dem vorhergehenden Ausführungsbeispielen.

Im Unterschied zu den zuvor vorgestellten Bremsvorrichtung 10 ist die Bremsvorrichtung 10 gemäß Figur 5 zweiteilig aufgebaut, indem der Grundkörper 11 in zwei Grundkörperhälften 11a, 11b geteilt ist. Jede der Hälften umschließt ein Segment der Achswelle 5 mit einer federnden Anordnung von jeweils zwei nach außen hervorstehenden Abschnitten 13 und drei Bremselemente 17. Die jeweils äußeren Bremselemente 17 gehen in Federarme 20 über. Die Grundkörperhälften 11a, 11b werden mithilfe der Federarme 20 auf die Achswelle 15 gedrückt. Je nach ausgeübtem Drück kann die Bremswirkung der Bremsvorrichtung 10 variiert werden.

Alternativ und nicht näher dargestellt kann auch hier eine umfassende Feder, z.B. nach Art der Schlingfeder gemäß Figur 4, vorgesehen sein, um die Bremskraft zu erhöhen.

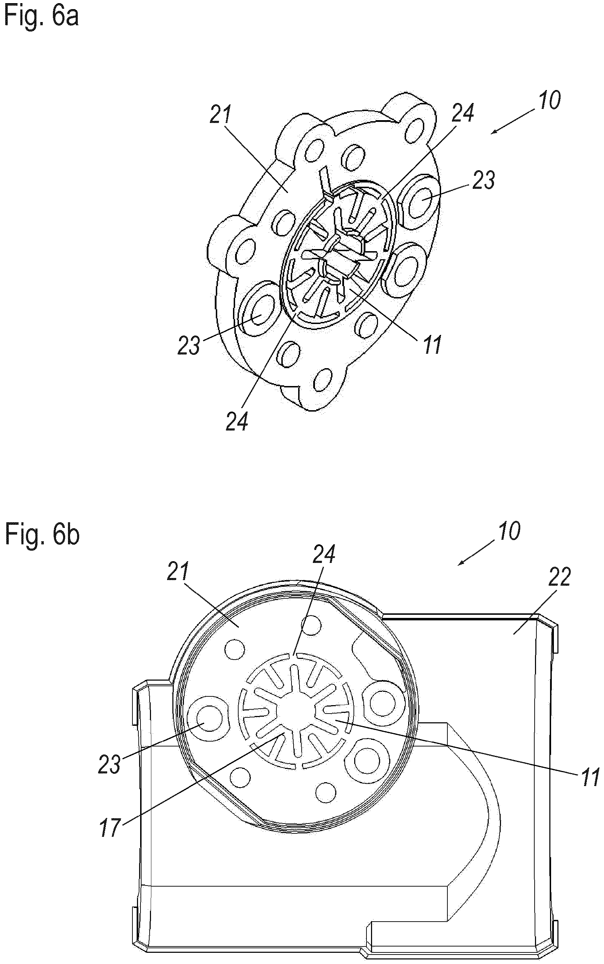

In Figur 6a und 6b ist jeweils eine weitere Ausgestaltung einer Bremsvorrichtung 10 dargestellt. In beiden Fällen ist die Bremsvorrichtung 10 integral mit einer Motorbefestigung ausgebildet, konkret beim Ausführungsbeispiel der Figur 6a integral mit einer Motorlagerplatte 21 und beim Ausführungsbeispiel der Figur 6b integral mit einer Motorlagerschale 22, die eine Motorlagerplatte 21 umfasst. In beiden Fällen dient die Motorlagerplatte 21 der Befestigung eines Antriebsmotors, beispielsweise des in der Figur 1d gezeigten Antriebsmotors 1, der mit seiner Flanschplatte 3 an der Motorlagerplatte 21 anliegt. Die Motorlagerplatte 21 weist Befestigungslöcher 23 auf, durch die Schrauben in entsprechende Gewindebohrungen der Flanschplatte 3 des Antriebsmotors 1 eingeschraubt werden können.

Mittig in der Motorlagerplatte 21 ist eine Bremsvorrichtung 10 in die Motorlagerplatte 21 bzw. somit auch die Motorlagerschale 22 integriert. Die Bremsvorrichtung 10 ist analog zu dem in den Figuren 2a-c bzw. 3a-c gezeigten Bremsvorrichtungen ausgebildet und wird über seitliche Stege 24 in der Motorlagerplatte 21 bzw. der Motorlagerschale 22 gehalten.

Bevorzugt sind Motorlagerplatte 21 bzw. Motorlagerschale 22 und der Grundkörper 11 der Bremsvorrichtung 10 sowie die Stege 24 einstückig aus dem gleichen Material gefertigt, beispielsweise in einem gemeinsamen Spritzgussverfahren. In alternativen Ausgestaltungen ist es möglich, ein ZweiKomponenten-Spritzgussverfahren einzusetzen, wobei die Motorlagerschale 21 bzw. die Motorlagerplatte 22 und die Bremsvorrichtung 10 zwar in einen gemeinsamen Spritzgussschritt hergestellt werden, jedoch aus unterschiedlichen Materialien. Auf diese Weise kann für die Bremsvorrichtung 10 unabhängig vom Material der Motorlagerschale 21 bzw. der Motorlagerplatte 22 ein im Hinblick auf die Federwirkung und die Bremswirkung geeignetes Material verwendet werden.

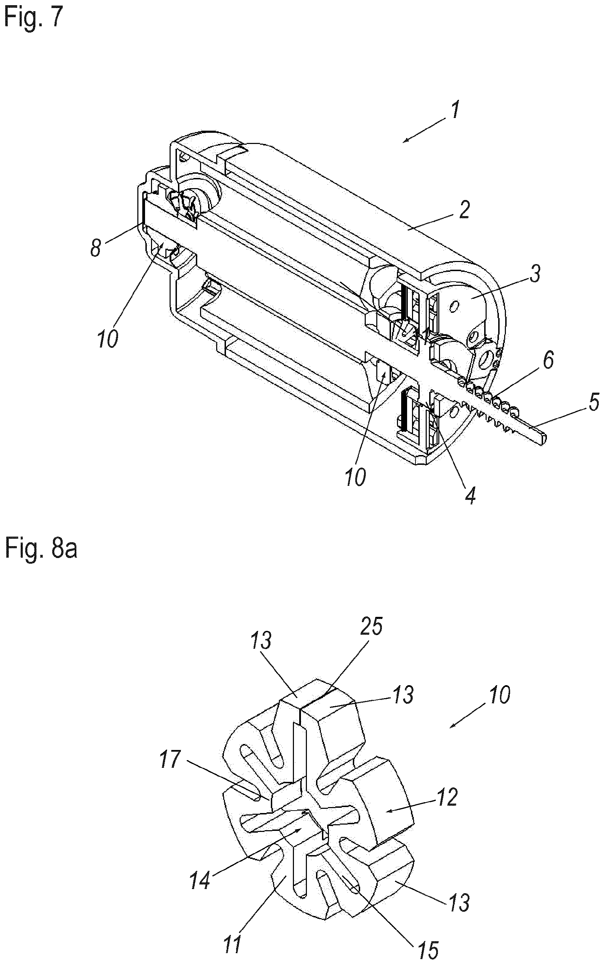

Die Motorlagerplatte 21 bzw. Motorlagerschale 22 können als Teil oder als Abschnitt eines Gehäuses des elektromotorischen Antriebs oder als Teil oder Abschnitt eines Getriebes des elektromotorischen Antriebs ausgebildet sein. Figur 7 zeigt einen Antriebsmotor 1 mit integrierten Bremsvorrichtungen 10. Der Antriebsmotor 1 ist in dieser Darstellung isometrisch und entlang seiner Achswelle 5 geschnitten dargestellt. Es sind bei dem dargestellten Ausführungsbeispiel zwei Bremsvorrichtung 10 in den Motor integriert. Eine erste Bremsvorrichtung 10 ist im Bereich eines vorderen Lagers 4 angeordnet. Diese Bremsvorrichtung 10 kann beispielsweise gemäß den Figuren 2b, 2c oder 3 a-c ausgebildet sein. Eine weitere Bremsvorrichtung 10 ist an der der Schnecke 6 gegenüberliegenden hinteren Motorseite in einem Lagerdom 8 angeordnet. In alternativen Ausgestaltungen kann vorgesehen sein, nur eine der Bremsvorrichtungen 10 im Antriebsmotor 1 zu integrieren.

Bei dem dargestellten Ausführungsbeispiel übernimmt die im hinteren Motorbereich angeordnete Bremsvorrichtung 10 zusätzlich die Funktion eines hinteren Motor-Achswellenlagers. Ein solches hinteres Motor-Achswellenlager ist wegen der relativ geringen auftretenden Radialkräfte häufig als Gleitlager ausgeführt. Die Bremsvorrichtung 10 übernimmt die Gleitlagerfunktion, jedoch mit der anmeldungsgemäß vorgesehenen höheren Gleitreibung gegenüber einem normalen Gleitlager.

In vorteilhafter Weise ist der Montageaufwand des Antriebsmotors 1 mit integrierter Bremsvorrichtung 10 gegenüber einem solchen mit Gleitlager identisch, wobei außerdem eine Wärmeentwicklung durch die Bremsvorrichtung 10 von der Schnecke 6 und dem damit verbundenen Getriebe ferngehalten wird.

In einer alternativen Ausgestaltung des Ausführungsbeispiels der Figur 7 kann vorgesehen sein, das Gleitlager von der Bremsvorrichtung zu trennen und die Bremsvorrichtung 10 zusätzlich zu einem Gleitlager auf die Achswelle 5 im hinteren Bereich des Motors aufzusetzen.

Auch wenn die zuvor gezeigten Bremsvorrichtungen 10 prinzipiell für eine dauerhafte Bremsung der Achswelle 5 des Antriebsmotors 1 geeignet und konzipiert sind, so können sie dennoch auf einfache Weise zu einer betätigbaren Bremse erweitert werden.

Figur 8a zeigt ein Ausführungsbeispiel einer Bremsvorrichtung 10, deren Bremswirkung von extern eingestellt werden kann. In ihrem Grundaufbau entspricht die Bremsvorrichtung 10 der Fig. 8a einer der in den Figuren 2b, 2c oder 3a-c gezeigten Bremsvorrichtungen 10. Beim Ausführungsbeispiel der Fig.8a ist in Verlängerung eines der inneren Einschnitte 15 der Grundkörper 11 im entsprechenden hervorstehenden Abschnitt 13 durch einen Schnitt aufgetrennt, so dass ein Spalt 25 gebildet ist. Aufgrund des Schnitts bzw. des Spalts 25 kann der Grundkörper 11 der Bremsvorrichtung 10 aufgeweitet werden bzw. im Betrieb zusammengedrückt werden, wodurch die von der Bremsvorrichtung 10 auf eine durchgesteckte Achswelle 5 ausgeübten Bremskräfte verändert werden können. Um leichter Kraft auf die den Spalt 25 benachbarten Abschnitte des Grundkörpers 11 ausüben zu können, können diese radial länger ausgebildet sein, als die sonstigen Abschnitte des Grundkörpers 11.

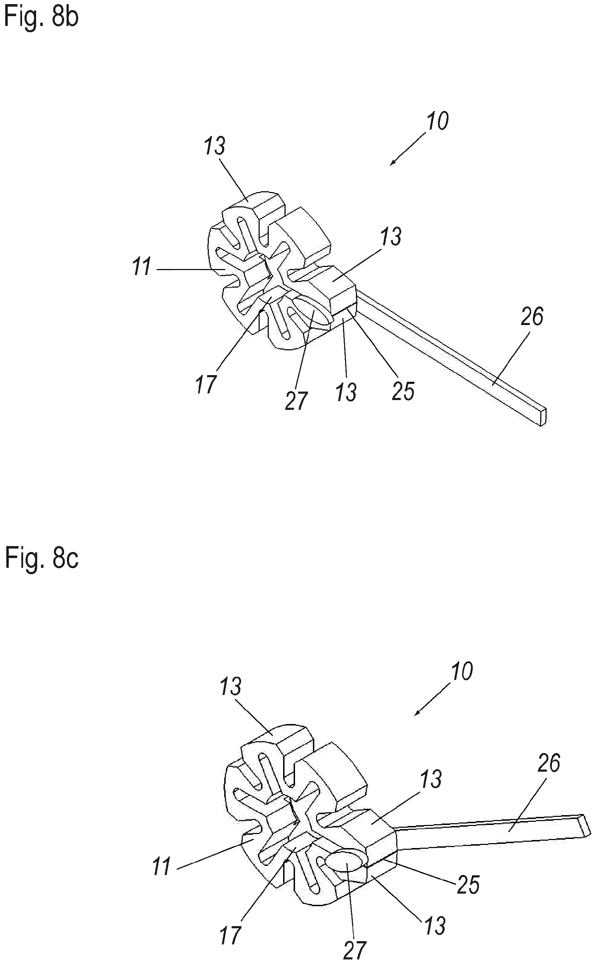

Bei allen zuvor genannten Beispielen, insbesondere aber bei den Bremsvorrichtungen 10 gemäß Figur 8a, kann mindestens ein drehbarer exzentrischer Nocken 27 in zumindest einem der inneren oder äußeren Einschnitte 12, 15 angeordnet sein, wie dieses in den Figuren 8b und 8c dargestellt ist. Der drehbare Nocken 27 kann beispielsweise am Ende eines Drehbetätigungshebels 26 befestigt sein, der zur Drehung bzw. zum Verschwenken des Nockens 27 seinerseits geschwenkt wird. Der Nocken 27 ist im Querschnitt in einer Richtung länger als in einer quer dazu stehenden Richtung. In dieser elongierten Richtung ist der Nocken 27 in einer Ruhestellung, die in Figur 8b dargestellt ist, parallel zur Ausrichtung des Einschnitts 12, 15, in dem er angeordnet ist, ausgerichtet. Der Nocken ist so dimensioniert, dass er in der Ruhestellung sich nicht im Eingriff mit Seitenwänden des Einschnitts 12, 15 befindet. Bei Verdrehen des Nockens 27 aus der Ruhestellung heraus, wenn sich also der Nocken 27 in dem Einschnitt 12, 15 "querstellt" kommt der Nocken mit Seitenflanken in Eingriff mit den Seitenwänden des Einschnitts 12, 15 und hebelt diesen auf. Diese Stellung des Nockens 27 durch Betätigen des Drehbetätigungshebels 26 ist in Figur 8c wiedergegeben. Durch das Aufhebeln des Einschnitts 12, 15 entgegen der Federwirkung, die der Grundkörper 11 der Bremsvorrichtung 10 inne hat, wird die von den Bremselemente 17 auf die Achswelle 7 ausgeübte Bremskraft verringert und die Bremse folglich gelöst.

Es kann vorgesehen sein, dass der Nocken 27 dazu in einer Richtung quer zu der Richtung, in der er longiert ist, so schmal ausgebildet ist, dass er in der Ruhestellung in den Einschnitt 12, 15, so wie er in den Figuren 2b und 2c, 3a-c oder 8a gezeigt ist, eingeführt werden kann. Es kann allerdings auch vorgesehen sein, den Einschnitt 12, 15 im Bereich des Nockens leicht aufgeweitet auszuführen. Auf diese Weise wird eine Zentrierung des Nockens innerhalb des Einschnitts 12, 15 erzielt. Der Nocken rutscht somit auch in der Ruhestellung nicht aus dem Einschnitt 12, 15 heraus.

Die beschriebene Betätigung der Bremsvorrichtung 10 über den beschriebenen Nocken 27 kann beispielsweise verwendet werden, um eine Schnellverstellung des Möbelantriebs über eine äußere Kraft und gegebenenfalls eine Notverstellung im stromlosen Zustand des Möbelantriebs zu ermöglichen. Dazu kann beispielsweise der den Nocken 27 tragende Drehbetätigungshebel 26 unmittelbar oder über ein Gestänge manuell von außen an dem Gehäuse des Möbelantriebs betätigt werden. Zur Kraftübertragung ist neben einem Gestänge auch ein Bowdenzug geeignet.

Unter der Annahme, dass die dem Antriebsmotor nachgeordneten Getriebe eines Möbelantriebs, beispielsweise also das Schneckengetriebe und ein Spindelantrieb, so wenig selbsthemmend sind, dass nach Aufheben der Bremswirkung der Bremsvorrichtung 10 eine manuelle Verstellung des Möbelteils erfolgen kann, kann die so gelöste Bremsvorrichtung 10 zur Schnellverstellung bzw. Notverstellung verwendet werden.

Neben dem beschriebenen Nocken 27 kann allgemein ein in einen der Einschnitte 12, 15 eingreifender Exzenter oder Keil oder zangenartiger Mechanismus verwendet werden, um die Bremsvorrichtung 10 zu lösen.

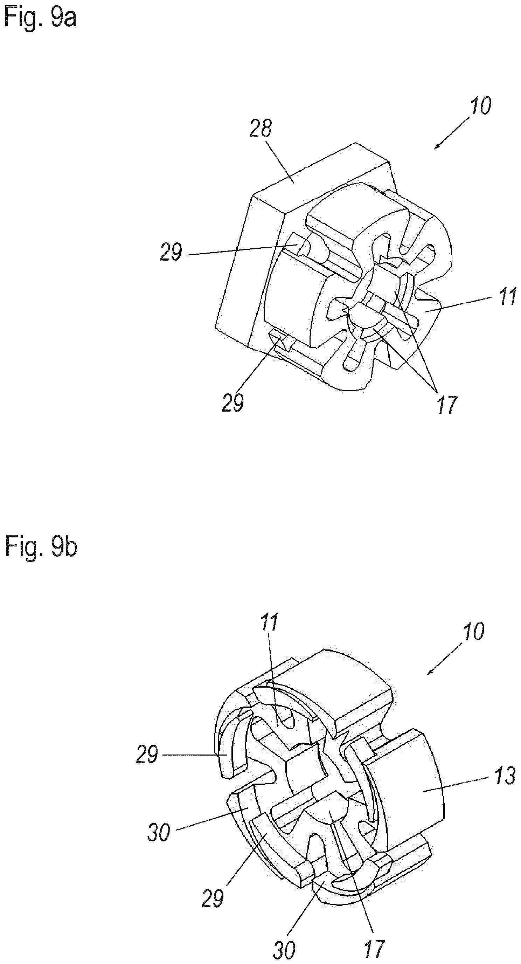

In den Figuren 9a und b ist ein weiteres Ausführungsbeispiel einer bezüglich seiner Bremskraft manipulierbaren Bremsvorrichtung 10 wiedergegeben. Die Bremsvorrichtung 10 umfasst einen Grundkörper 11, der wiederum bezüglich seines grundsätzlichen Aufbaus mit denen der Figuren 2a, b, c und 3a, b vergleichbar ist.

Mit dem Grundkörper 11 ist eine Drehbetätigungsvorrichtung 28 im Eingriff, die bezüglich ihres Grundaufbaus ebenfalls ringförmig aufgebaut ist, wobei die von der Bremsvorrichtung 10 zu bremsende Achswelle zentral durch die Drehbetätigungsvorrichtung 28 führt. An einer dem Grundkörper 11 zuweisenden Fläche der Drehbetätigungsvorrichtung 28 sind umlaufend mehrere Spreizelemente 29 ausgebildet.

Figur 9a zeigt eine isometrische Aufsicht auf den Grundkörper 11 im Vordergrund und die aus dieser Blickrichtung von hinten in den Grundkörper 11 eingreifende Drehbetätigungsvorrichtung 28. In Figur 9b ist eine isometrische Schnittdarstellung der Anordnung aus Grundkörper 11 und Drehbetätigungsvorrichtung 28 wiedergegeben, wobei in Figur 9b von der Drehbetätigungsvorrichtung 28 nur die Spreizelemente 29 sichtbar sind. In dieser Ansicht ist die zur Drehbetätigungsvorrichtung 28 weisende Rückseite des Grundkörpers 11 sowie die Formgebung der Spreizelemente 29 sichtbar.

In diesem Ausführungsbeispiel ragen auf der Rückseite des Grundkörpers 11 die äußeren hervorstehenden Abschnitte 13 in axialer Richtung über den inneren Teil des Grundkörpers 11 hinaus, sodass von den hervorstehenden Abschnitten 13 ein überstehender Rand gebildet wird. Dieser Rand ist jeweils im Bereich der hervorstehenden Abschnitte 13 mit einer Anlaufschräge 30 versehen. Korrespondierend mit der Formgebung dieser Anlaufschrägen 30 sind die Spreizelemente 29 an ihrer radial nach außen weisenden Seite exzentrisch geformt. Die Formgebung des Spreizelements 29 und der Anlaufschräge 30 führt zu einem Aufspreizen des Grundkörpers 11 bei Verdrehung des Grundkörpers 11 gegenüber der Drehbetätigungsvorrichtung 28. Eine relative Drehbewegung dieser beiden Elemente zueinander kann somit verwendet werden, um den Grundkörper 11 mehr oder weniger aufzuspreizen, wodurch die Bremswirkung auf eine durch den Grundkörper 11 führende Achswelle variiert wird.

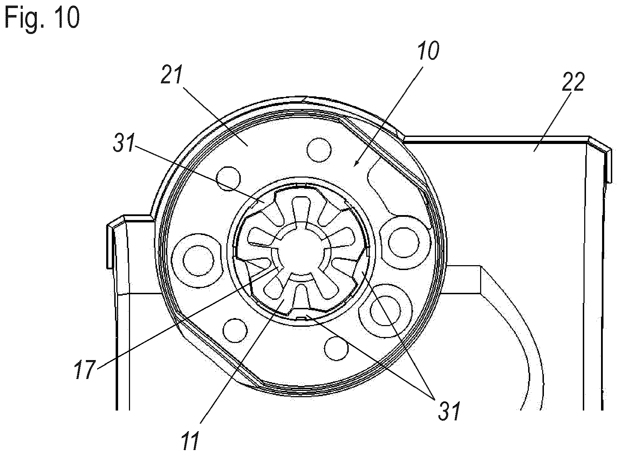

In Figur 10 ist ein weiteres Ausführungsbeispiel einer Bremsvorrichtung 10 angegeben, die das beim Ausführungsbeispiel der Figur 9a und 9b dargestellte Prinzip ausnutzt.

Hierbei ist eine Bremsvorrichtung ähnlich wie in Figur 6b in eine Motorlagerschale 22 mit Motorlagerplatte 21 integriert. Beim Ausführungsbeispiel der Figur 10 wird der Antriebsmotor 1 von hinten an die Motorlagerplatte 21 angesetzt, sodass seine Achswelle 5 mit Schnecke 6 nach vorne in der dargestellten Figur herausragt. Die Bremsvorrichtung 10 wird mit ihrem Grundkörper 11 von vorne über die Achswelle 5 geführt und ist in einer Vertiefung der Motorlagerplatte 21 aufgenommen.

In diesem Ausführungsbeispiel sind anstelle von Spreizelement 29 Kompressionselemente 31 am äußeren Umfang der Aufnahme des Grundkörpers 11 an der Motorlagerplatte 21 ausgebildet. Analog zu den Spreizelementen 29 sind auch die Kompressionselemente 31 bezüglich ihres radialen Verlaufs exzentrisch ausgebildet. Am Grundkörper 11 sind in diesem Ausführungsbeispiel an der Außenseite wiederum Anlaufschrägen 30 ausgebildet. Abhängig von der Drehrichtung der durch den Grundkörper 11 der Bremsvorrichtung 10 geführten Achswelle wird ein Drehmoment auf den Grundkörper 11 ausgeübt, der zu einer Verdrehung des Grundkörpers 11 gegenüber den Kompressionselementen 31 führt. In einer Drehrichtung der Achswelle kann sich der Grundkörper 11 soweit entspannen, dass er nur mit seiner Federkraft die Achswelle bremst. In der anderen Drehrichtung wird der Grundkörper 11 durch auflaufen der hier äußeren Anlaufschrägen 30 auf die Kompressionselemente 31 zusammengedrückt, wodurch die Bremswirkung verstärkt wird.

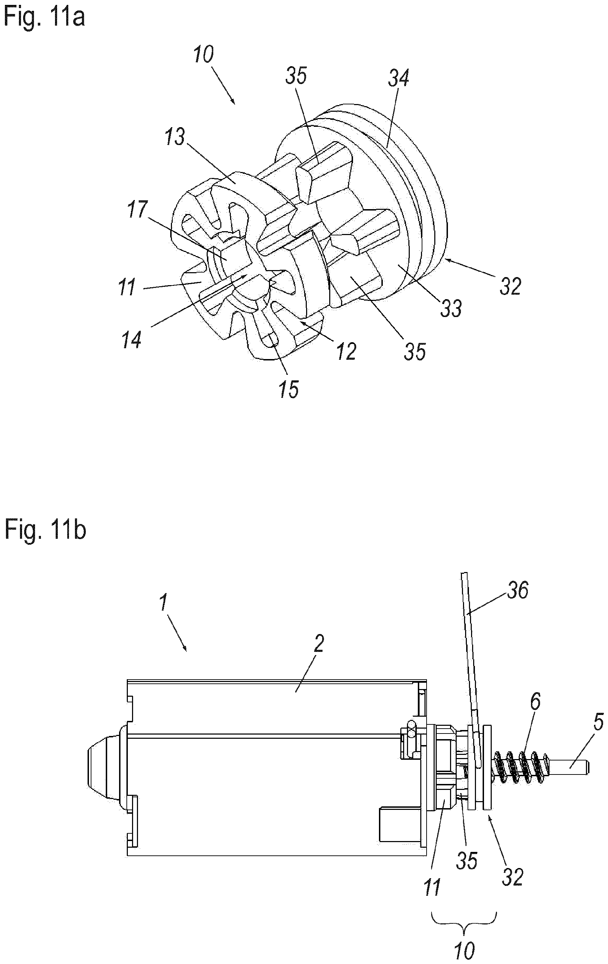

In den Figuren 11a und 11b ist ein weiteres Ausführungsbeispiel einer Bremsvorrichtung 10 dargestellt, die in ihrer Bremskraft variiert werden kann. Die Figur 11a zeigt die Bremsvorrichtung 10 zunächst separat von einem Antriebsmotor in einer isometrischen Darstellung. Figur 11b zeigt die Bremsvorrichtung 20 schließlich im Zusammenspiel mit einem Antriebsmotor 1.

In ähnlicher Weise wie die in den Figuren 9a und 9b dargestellte Bremsvorrichtung 10 umfasst auch die in Figur 11a bzw. 11b gezeigte Bremsvorrichtung 10 einen Grundkörper 11, der mit einer Betätigungsvorrichtung zusammenwirkt. Die Betätigungsvorrichtung ist in diesem Ausführungsbeispiel als eine axiale Betätigungsvorrichtung 32 ausgebildet, die zur Veränderung der Bremswirkung in axialer Richtung relativ zum Grundkörper 11 verschoben wird.

Die axiale Betätigungsvorrichtung 32 ist wiederum ringförmig aufgebaut mit einer scheibenartigen Basis 33, wobei die axiale Betätigungsvorrichtung 32 mit ihrer Basis im Wesentlichen parallel zum Grundkörper 11 gemeinsam auf der zu bremsenden Achswelle 5 angeordnet ist. Die Basis 33 ist mit einer umlaufenden Nut 34 versehen, in die ein Schwenkhebel 36 mit einer u-förmigen Gabel eingreift, um die Betätigungsvorrichtung 32 axial auf der Achswelle 5 verschieben zu können.

Auf der dem Grundkörper 11 zugewandten Seite der Basis 33 ist eine Anzahl hervorstehender Dorne 35 ausgebildet, die in die inneren Einschnitte 15 des Grundkörpers 11 eingreifen. In der Figur 11a sind der Grundkörper 11 und die axiale Betätigungsvorrichtung 32 beabstandet voneinander gezeichnet, um die Ausgestaltung der beiden Komponenten übersichtlicher darstellen zu können.

Die Dorne 35 sind konisch geformt. Sie verjüngen sich ausgehend von der Basis 33 zum freien Ende hin. Wenn die Dorne 35 in die inneren Einschnitte 15 eingreifen, spreizen sie den Grundkörper 11 gleichmäßig über seinen gesamten Umfang auf, und zwar umso mehr, je weiter die Dorne 35 in den Grundkörper 11 eingeschoben werden.

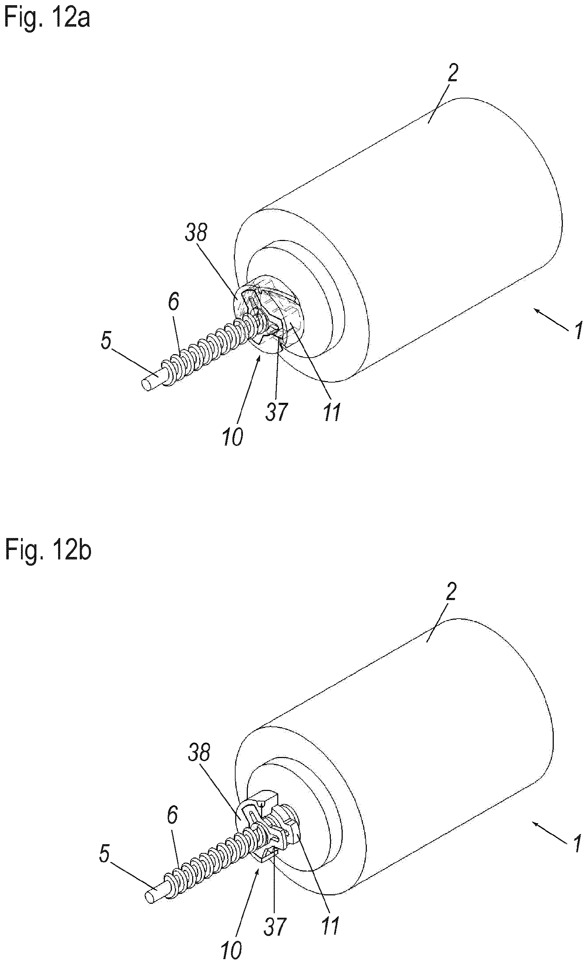

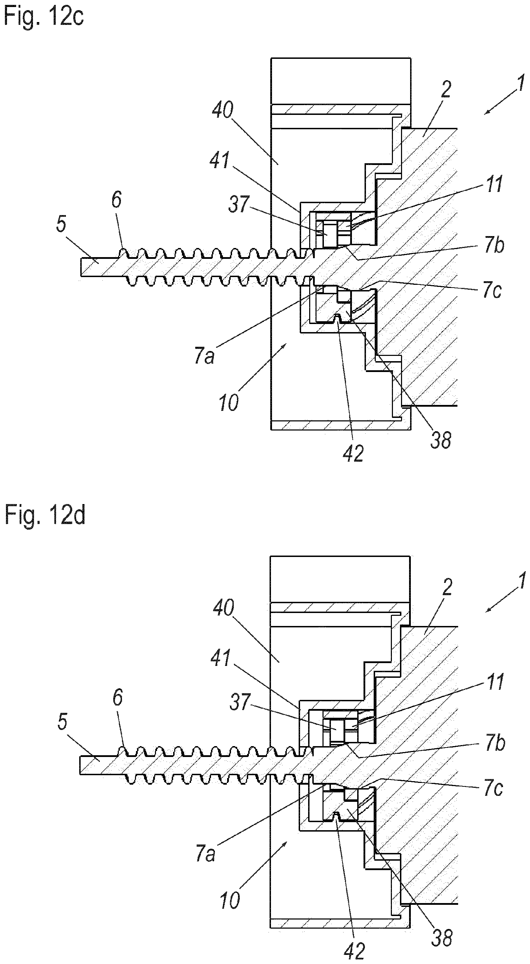

Ein weiteres Ausführungsbeispiel einer Drehrichtungsabhängig automatisch die Bremskraft variierenden Bremsvorrichtung 10 ist in den Figuren 12a-d dargestellt. Die Figuren 12a und 12b zeigen die Bremsvorrichtung 10 angeordnet auf einer Achswelle 5 eines Antriebsmotors 1 in jeweils einer isometrischen Darstellung. Um den Aufbau der Bremsvorrichtung 10 zu verdeutlichen, ist die Bremsvorrichtung 10 bei der Figur 12a teilweise transparent dargestellt und bei der Figur 12b teilweise geschnitten. In den Figuren 12c und d sind Schnitte durch den Bereich der Bremsvorrichtung 10 wiedergegeben, die die Bremsvorrichtung 10 bei unterschiedlichen Drehrichtungen der Achswelle 5 des Antriebsmotors 1 wiedergegeben.

Die Bremsvorrichtung 10 umfasst in diesem Ausführungsbeispiel einen Grundkörper 11, der vergleichbar mit den Grundkörpern 11 der Bremsvorrichtung 10 gemäß Figur 3a ausgebildet ist. Eine Ausführung mit mehr als den hier gezeigten drei hervorstehenden Abschnitten 13 ist jedoch ebenfalls denkbar. Der Grundkörper 11 ist parallel zu einer vergleichbar ausgestalteten Steuerscheibe 37 in einem gemeinsamen Käfig 38 gehalten. Der gemeinsame Käfig 38 fixiert den Grundkörper 11 und die Steuerscheibe 37 parallel beabstandet zueinander und drehfest zueinander.

Die Steuerscheibe 37 weist ebenso wie der Grundkörper 11 Bremsflächen auf, die federnd auf die Achswelle 5 gedrückt werden. Die von der Steuerscheibe 37 auf die Achswelle 5 ausgeübten Bremskräfte sind jedoch kleiner als die des Grundkörpers 11. Zudem sind der Grundkörper 11 und die Steuerscheibe 37 für unterschiedliche Achsdurchmesser ausgelegt. Entsprechend ist die Achswelle 5 in Achsabschnitt 7, in dem die Bremsvorrichtung 10 wirkt, so profiliert, dass ein Steuerabschnitt 7a im Bereich der Steuerscheibe 37 einen kleineren Durchmesser aufweist als ein Bremsabschnitt 7c, der den Grundkörper 11 zugeordnet ist. Steuerabschnitt 7a und Bremsabschnitt 7c gehen in einem kegelförmigen Abschnitt, im Folgenden Freilaufabschnitt 7b genannt, ineinander über. Die Profilierung des Achsabschnitts 7 in die drei genannten Abschnitte 7a-c ist in den Figuren 12c und 12d ersichtlich.

Im eingebauten Zustand des Antriebsmotors 1 und der Bremsvorrichtung 10, der in den Figuren 12c und d dargestellt ist, ist der Käfig 38 in einer hohlzylinderförmigen Aufnahme 41 einer Motorhalterung 40 angeordnet, in der sich der Käfig 38 drehen kann und der er sich um einen gewissen Verschiebeweg axial bewegen kann. In der hohlzylinderförmigen Aufnahme 41 ist am Umfang nach innen ragend ein Gewindesteg 42 ausgebildet, der in die Schrägnut 39 des Käfigs 38 eingreift. Dadurch ist die Drehbewegung und die axiale Bewegung des Käfigs 38 so gekoppelt, dass bei Verdrehung des Käfigs 38 gegenüber der Motorhalterung 40 sich der Käfig 38 axial bewegt.

Die beiden Schnittbilder der Figuren 12c und d unterscheiden sich in der Drehrichtung der Motorwelle 5, die durch einen Drehrichtungspfeil jeweils symbolisiert ist. Bei der in Figur 12c dargestellten Situation ist der Käfig 38 maximal in die hohlzylinderförmige Aufnahme 41 (nach links in der Figur) positioniert. In dieser Position ist die Steuerscheibe 37 in Kontakt mit dem Steuerabschnitt 7a der Achswelle 5 und erfährt ein entsprechendes Drehmoment, durch das der Käfig 38 in der dargestellten Position gehalten ist. In dieser Position ist der Grundkörper 11 durch den Käfig 38 so positioniert, dass er sich ganz oder zumindest teilweise in konischen Freilaufabschnitt 7b der Achswelle 5 befindet. Der Grundkörper 11 erfährt somit keine oder eine nur sehr geringe Bremswirkung. Insgesamt ergibt sich bei dieser Drehrichtung der Achswelle 5 eine nur kleine Bremswirkung auf die Achswelle 5.

Wird dagegen die Drehrichtung der Achswelle 5 umgedreht, wie dies in Figur 12d dargestellt ist, erfährt der Käfig 38 bedingt durch die Steuerscheibe 37 ein Drehmoment, das durch das Zusammenspiel von Schrägnut 39 und Gewindesteg 42 zu einer Verschiebung des Käfigs 38 in Richtung des Motorgehäuses 2 führt. Durch diese Verschiebung wird der Grundkörper 11 vom Freilaufabschnitt 7b auf den Bremsabschnitt 7c geschoben, wo er eine stärkere Bremswirkung erfährt. Das damit verbundene Drehmoment schiebt den Käfig 38 weiter Richtung Motorgehäuse 2, bis der Grundkörper 11 vollständig mit seinen Bremselementen 17 im Bremsabschnitt 7c bremsend auf die Achswelle 5 wirkt. Bei dieser Drehrichtung der Achswelle 5 wird somit eine deutlich größere Bremswirkung erzielt, als bei der entgegengesetzten Drehrichtung.

Ändert die Achswelle 5 erneut die Drehrichtung, führt das in umgekehrter Richtung wirkende Drehmoment von dem Grundkörper 11 und der Steuerscheibe 37 dazu, dass der Käfig 38 wiederum in die hohlzylinderförmige Aufnahme 41 einfährt, bis der in Figur 12c dargestellte Zustand mit geringer Bremswirkung erzielt ist.

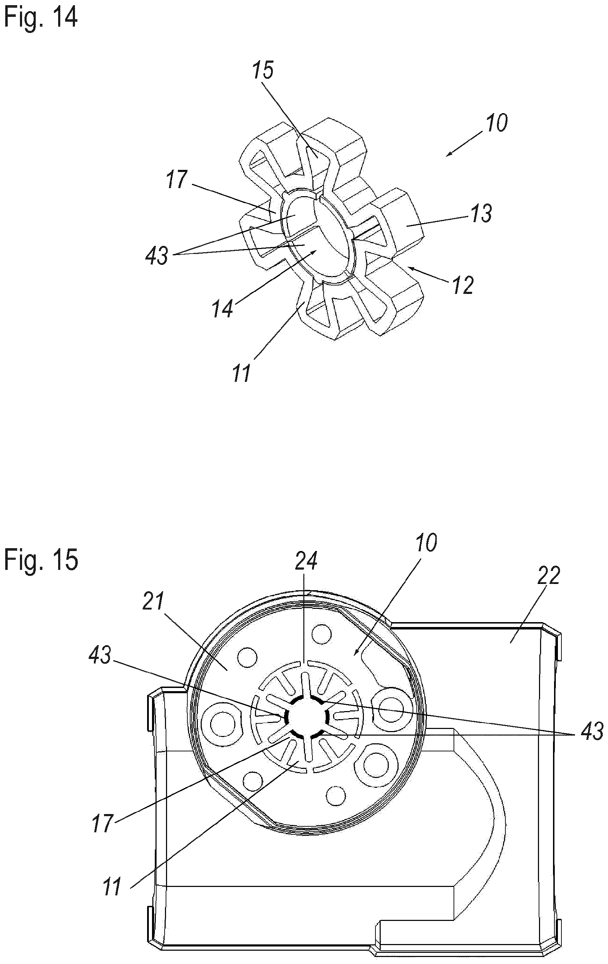

Figur 13 zeigt ein weiteres Ausführungsbeispiel einer anmeldungsgemäßen Bremsvorrichtung 10. Die Bremsvorrichtung 10 ist in einer isometrischen Darstellung aufgesetzt auf eine Achswelle 5 eines Antriebsmotors 1 wiedergegeben. Die Bremsvorrichtung 10 weist einen schleifenförmigen Grundkörper 11 auf, der in einem zentralen Bereich zwei in etwa halbkreisförmige Bremselemente 17 bereitstellt, die auf einen Achsabschnitt 7 der Achswelle 5 einwirken. Die beiden Bremselemente 17 werden über zwei seitliche bogenförmige Federabschnitte aufeinander zugedrückt, wodurch die Bremswirkung auf die Achswelle 6 resultiert. Bezüglich des Grundaufbaus entspricht die Bremsvorrichtung 10 damit in etwa der der Bremsvorrichtungen aus den Figuren 2a-c und 3a und b. Wiederum sind Bremselemente 17 und die die federnde Wirkung bedingenden Federabschnitte aus dem gleichen Material und einstückig hergestellt. Als Material für die Bremsvorrichtung 10 der Figur 15 kommt neben einem Kunststoff auch ein Metall, beispielsweise Zink, z. B. in Form von Zinkdruckguss, oder Aluminium oder Stahl in Frage.

Die kleinere Anzahl von hier nur zwei Bremselemente 17 verglichen mit den zuvor dargestellten Ausführungsbeispielen, die eine Anzahl von drei bis sechs Bremselemente 17 aufweisen, bedingt eine höhere Federkraft, die die Federabschnitte aufbringen müssen. Aus diesem Grund ist die dargestellte Bremsvorrichtung 10 in axialer Richtung dünner ausgebildet, die Federabschnitte sind in radialer Richtung jedoch von größerer Materialstärke, um die erforderliche Andrückkraft auf die Bremselemente 17 ausüben zu können.

In den Figuren 14 und 15 sind alternative Ausgestaltungen von Bremsvorrichtung 10 dargestellt. Die in Figur 14 wiedergegebene Bremsvorrichtung 10 gleicht den in Figur 3a bzw. 3b gezeigten. In einem Grundkörper 11 sind wiederum innere und äußere Einschnitte 15, 12 eingebracht, jedoch so, dass nicht die Seiten des Einschnitts parallel zueinander verlaufen, sondern das verbleibende Material des Grundkörpers 11, also innere Teil des Grundkörpers 11 bzw. die hervorstehenden Abschnitte 13 jeweils gleiche Materialstärke aufweisen. Es entsteht so eine Struktur, die eher einem zu einem Ring geschlossenen gewählten Band entspricht.

Die Bremsvorrichtung 10 der Figur 14 könnte unmittelbar mit den nach innen weisenden Bremselemente 17 des Grundkörpers 11 als Bremsflächen genutzt auf eine Achse einwirken. Im dargestellten Beispiel sind abweichend davon drei Ringsegmente 43 eingesetzt, die drehfest im Grundkörper 11 gehalten werden und die an ihrer Innenseite Bremsflächen bereitstellen. Mit einer derartigen Ausgestaltung kann das Material der Bremsflächen unabhängig vom Material des Grundkörpers 11 gewählt werden. Dadurch ist beispielsweise die Verwendung eines möglichst harten, aber nicht unbedingt so gut federnden Materials für die Bremsflächen gegenüber dem Grundkörper 11 möglich.

Figur 15 zeigt eine in eine Motorlagerschale 21 integrierte Bremsvorrichtung 10, die bezüglich ihres Grundaufbaus vergleichbar mit der in Figur 6 gezeigten Bremsvorrichtung 10 ist.

Im Unterschied zur Bremsvorrichtung der Figur 6 sind vorliegend innen auf die Bremselemente 17 ebenfalls Ringsegmente 43 aufgesetzt, die aus anderen Material bestehen können, als der Grundkörper 11 der Bremsvorrichtung 10 bzw. der Motorlagerschale 21. Gegebenenfalls können die Ringsegmente 43 einstückig mit der Motorlagerschale 21 bzw. dem Grundkörper 11 ausgebildet sein, beispielsweise in einem Mehrkomponentenspritzverfahren. Auch ist es möglich, die Ringsegmente 43 zunächst separat zu fertigen und dann eingesetzt in die Spritzgussform der Motorlagerschale 21 die Motorlagerschale 21 an die Ringsegmente 43 anzuspritzen.

### Bezugszeichen

- 1: Antriebsmotor
- 2: Gehäuse
- 3: Flanschplatte
- 4: Lager
- 5: Achswelle
- 6: Schnecke
- 7: Achsabschnitt
- 7a: Steuerabschnitt
- 7b: Freilaufabschnitt
- 7c: Bremsabschnitt
- 8: Lagerdom

- 10: Bremsvorrichtung
- 11: Grundkörper
- 11a, b: Grundkörperhälfte
- 12: äußerer Einschnitt
- 13: hervorstehender Abschnitt
- 14: zentrale Öffnung (Achsaufnahme)
- 15: innerer Einschnitt
- 16: Federzunge
- 17: Bremselement
- 18: Schlingfeder
- 19: abgebogenes Ende
- 20: Federarm
- 21: Motorlagerplatte
- 22: Motorlagerschale
- 23: Befestigungsloch
- 24: Steg
- 25: Spalt
- 26: Drehbetätigungshebel
- 27: exzentrischer Nocken
- 28: Drehbetätigungseinrichtung
- 29: Spreizelement
- 30: innere Anlaufschräge
- 31: Kompressionselement
- 32: axiale Betätigungsvorrichtung
- 33: Basis
- 34: umlaufende Nut
- 35: Dorn
- 36: Schwenkhebel
- 37: Steuerscheibe
- 38: Käfig
- 39: Schrägnut
- 40: Motorhalterung
- 41: hohlzylindrische Aufnahme
- 42: Gewindesteg
- 43: Ringsegment

## Patentansprüche

1. Bremsvorrichtung (10) für einen elektrischen Antriebsmotor (1), insbesondere einen Antriebsmotor (2) mit einer über ein Motorengehäuse (2) hervorstehenden Ankerwelle (5), die mindestens ein Bremselement (17) und einen Kraftspeicher aufweist, wobei der Kraftspeicher eine Reibfläche des Bremselements permanent mit einer Bremskraft beaufschlagt, **dadurch gekennzeichnet, dass** Kraftspeicher und Bremselement (17) aus dem gleichen Material einstückig gebildet sind.

2. Bremsvorrichtung (10) nach Anspruch 1, aufweisend einen ringförmigen Grundkörper (11), der zumindest in einem äußeren Bereich umlaufend geschlossen ist.

3. Bremsvorrichtung (10) nach Anspruch 2, aufweisend eine zentrale Öffnung (14), mit Innenflächen, die die Reibflächen der Bremsvorrichtung (10) bilden.

4. Bremsvorrichtung (10) nach Anspruch 2 oder 3, aufweisend mindestens einen Einschnitt (15), der von der zentralen Öffnung (14) ausgehend in den Grundkörper (11) eingebracht ist.

5. Bremsvorrichtung (10) nach einem der Ansprüche 2 bis 4, aufweisend mindestens einen weiteren Einschnitt (12), der von einem äußeren Umfang des Grundkörpers (11) ausgehend in den Grundkörper (11) eingebracht ist.

6. Bremsvorrichtung (10) nach Anspruch 4 oder 5, bei der der Grundkörper (11) jeweils mehrere Einschnitte (12) und/oder mehrere weitere Einschnitte (15) aufweist, die sternförmig angeordnet sind.

7. Bremsvorrichtung (10) nach Anspruch 6, bei der der Grundkörper (11) jeweils mehrere Einschnitte (12) und mehrere weitere Einschnitte (15) aufweist, wobei sich die Einschnitte (12) und die weiteren Einschnitte (15) umlaufend abwechseln.

8. Bremsvorrichtung (10) nach einem der Ansprüche 4 bis 7, bei der Grundkörper (11) aus einem Blechmaterial gefertigt ist, wobei durch die Einschnitte (15) zwischenliegende Federzungen (16) ausgebildet sind, die an ihrem freien Ende einen axial verlaufenden Abschnitt aufweisen, deren Oberflächen die Reibfläche bildet.

9. Bremsvorrichtung (10) nach einem der Ansprüche 4 bis 7, bei der Grundkörper (11) scheibenförmig aus einem Vollmaterial gefertigt ist.

10. Bremsvorrichtung (10) nach Anspruch 9, bei der der Grundkörper (11) aus Zink, Bronze oder PEEK besteht.

11. Bremsvorrichtung (10) nach Anspruch 8 oder 9, bei der eine Oberfläche des mindestens einen Bremselements (17) die Reibfläche bildet.

12. Bremsvorrichtung (10) nach Anspruch 8 oder 9, bei der mindestens ein zusätzliches Ringsegment (43) auf das mindestens eine Bremselement (17) aufgebracht ist und zur zentralen Öffnung (14) hinweist, wobei eine Oberfläche des Ringsegments (43) die Reibfläche bildet.

13. Bremsvorrichtung (10) nach einem der Ansprüche 1 bis 12, die integral mit einer Motorlagerplatte (21) ausgebildet ist.

14. Bremsvorrichtung (10) nach einem der Ansprüche 1 bis 12, die in den elektrischen Antriebsmotor (1) integriert ist.

15. Bremsvorrichtung (10) nach Anspruch 14, die als Gleitlager für die Antriebswelle (5) des elektrischen Antriebsmotors (1) ausgebildet ist.

## Claims

1. A braking device (10) for an electric drive motor (1), in particular a drive motor (2) with an armature shaft (5) projecting over a motor housing (2), which has at least one braking element (17) and an energy storage device, wherein the energy storage device applies a braking force permanently onto a friction surface of the braking element, **characterized in that** the energy storage device and braking element (17) are integrally formed of the same material.

2. A braking device (10) according to claim 1, comprising an annular base body (11) which is circumferentially closed at least in an outer region.

3. A braking device (10) according to claim 2, comprising a central opening (14), having inner surfaces that form the friction surfaces of the braking device (10).

4. A braking device (10) according to claim 2 or 3, comprising at least one incision (15) which, originating from the central opening (14), is introduced into the base body (11).

5. A braking device (10) according to one of the claims 2 to 4, comprising at least one further incision (12) which, originating from an outer circumference of the base body (11), is introduced into the base body (11).

6. A braking device (10) according to claim 4 or 5, wherein the base body (11) has in each case a plurality of incisions (12) and/or a plurality of further incisions (15) which are arranged in a star shape.

7. A braking device (10) according to claim 6, wherein the base body (11) has in each case a plurality of incisions (12) and a plurality of further incisions (15), wherein the incisions (12) and the further incisions (15) alternate circumferentially.

8. A braking device (10) according to one of the claims 4 to 7, wherein the base body (11) is made of a sheet metal material, wherein interposed spring tongues (16) are formed by the incisions (15), which at their free end have an axially extending section whose surfaces form the friction surface.

9. A braking device (10) according to one of the claims 4 to 7, wherein the base body (11) is made in a disk-shaped manner of a solid material.

10. A braking device (10) according to claim 9, wherein the base body (11) consists of zinc, bronze or PEEK.

11. A braking device (10) according to claim 8 or 9, wherein a surface of the at least one braking element (17) forms the friction surface.

12. A braking device (10) according to claim 8 or 9, wherein at least one additional ring segment (43) is applied to the at least one braking element (17) and faces the central opening (14), wherein a surface of the ring segment (43) forms the friction surface.

13. A braking device (10) according to one of the claims 1 to 12, which is formed integrally with a motor bearing plate (21).

14. A braking device (10) according to one of the claims 1 to 12, which is integrated in the electric drive motor (1).

15. A braking device (10) according to claim 14, which is designed as a sliding bearing for the drive shaft (5) of the electric drive motor (1).

## Revendications

1. Dispositif de freinage (10) pour un moteur d'entraînement électrique (1), en particulier un moteur d'entraînement (2) avec un arbre d'induit (5) qui dépasse dans un carter de moteur (2), qui comporte au moins un élément de freinage (17) et un accumulateur de force, lequel accumulateur de force soumet de façon permanente une surface de frottement de l'élément de freinage à un effort de freinage, **caractérisé en ce que** l'accumulateur de force et l'élément de freinage (17) sont formés d'un seul tenant du même matériau.

2. Dispositif de freinage (10) selon la revendication 1, présentant un corps de base (11) annulaire qui est fermé sur sa circonférence au moins dans une région extérieure.

3. Dispositif de freinage (10) selon la revendication 2, présentant une ouverture centrale (14), avec des surfaces intérieures qui forment les surfaces de frottement du dispositif de freinage (10).

4. Dispositif de freinage (10) selon la revendication 2 ou 3, présentant au moins une encoche (15) qui est formée dans le corps de base (11) à partir de l'ouverture centrale (14).

5. Dispositif de freinage (10) selon l'une des revendications 2 à 4, présentant au moins une autre encoche (12) qui est formée dans le corps de base (11) à partir d'une circonférence extérieure du corps de base (11).

6. Dispositif de freinage (10) selon la revendication 4 ou 5, dans lequel le corps de base (11) présente plusieurs encoches (12) et/ou plusieurs autres encoches (15) qui sont disposées en étoile.

7. Dispositif de freinage (10) selon la revendication 6, dans lequel le corps de base (11) présente plusieurs encoches (12) et plusieurs autres encoches (15), les encoches (12) et les autres encoches (15) étant alternées sur la circonférence.

8. Dispositif de freinage (10) selon l'une des revendications 4 à 7, dans lequel le corps de base (11) est fait d'une tôle, les encoches (15) formant entre elles des languettes de ressort (16) qui présentent à leur extrémité libre une section orientée dans le sens axial dont la surface forme la surface de frottement.

9. Dispositif de freinage (10) selon l'une des revendications 4 à 7, dans lequel le corps de base (11) est fabriqué en forme de disque à partir d'un matériau massif.

10. Dispositif de freinage (10) selon la revendication 9, dans lequel le corps de base (11) se compose de zinc, de bronze ou de PEEK.

11. Dispositif de freinage (10) selon la revendication 8 ou 9, dans lequel une surface de l'au moins un élément de freinage (17) forme la surface de frottement.

12. Dispositif de freinage (10) selon la revendication 8 ou 9, dans lequel au moins un segment d'anneau supplémentaire (43) est disposé sur l'au moins un élément de freinage (17) et tourné vers l'ouverture centrale (14), une surface du segment d'anneau (43) formant la surface de frottement.

13. Dispositif de freinage (10) selon l'une des revendications 1 à 12, formé d'un seul tenant avec une plaque d'appui du moteur (21).

14. Dispositif de freinage (10) selon l'une des revendications 1 à 12, qui est intégré dans un moteur d'entraînement (1) électrique.

15. Dispositif de freinage (10) selon la revendication 14, qui est conformé comme un palier de glissement pour l'arbre menant (5) du moteur d'entraînement (1) électrique.
